# FASCICULE DE BREVET EUROPEEN

(11) **EP 3 312 046 B1**
(45) Date de publication et mention de la délivrance du brevet: **11.03.2020**
(21) Numéro de dépôt: 17197223.5
(22) Date de dépôt: 19.10.2017
(51) Int. Cl.: B60L 53/16

(54) **DISPOSITIF DE DÉVIDAGE D'UN CÂBLE ÉLECTRIQUE, NOTAMMENT UN CÂBLE DE CHARGE POUR UN VÉHICULE ÉLECTRIQUE OU HYBRIDE**
VORRICHTUNG ZUM ABWICKELN EINES ELEKTROKABELS, INSBESONDERE EINES LADEKABELS FÜR EIN ELEKTRO- ODER HYBRIDFAHRZEUG
DEVICE FOR UNWINDING AN ELECTRICAL CABLE, IN PARTICULAR A CHARGING CABLE FOR AN ELECTRIC OR HYBRID VEHICLE

(30) Priorité: 20.10.2016 FR 1660186
(43) Date de publication de la demande: 25.04.2018
(73) Titulaire: RENAULT s.a.s., 92100 Boulogne-Billancourt (FR)
(72) Inventeur: BUFFETAUD, Julien, 91320 WISSOUS (FR); DERUY, Didier, 92170 VANVES (FR); MICHAUT, Cyrille, 28600 LUISANT (FR)

(56) Documents cités:
- WO-A2-2009/035531
- DE-A1-102012 022 100
- DE-U1- 8 213 269
- FR-A1- 2 983 359

## Description

La présente invention concerne un dispositif de dévidage d'un câble électrique, notamment un câble de charge pour un véhicule électrique ou hybride.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle ») sont aujourd'hui considérés comme la solution la plus prometteuse pour diminuer les émissions de CO₂.

Différentes technologies de stockage de l'énergie électrique ont été testées dans les dernières années afin de répondre aux besoins des EV. Il apparaît aujourd'hui que les batteries à cellules lithium-ion (Li-ion) sont celles susceptibles de fournir le meilleur compromis entre la densité de puissance, qui favorise les performances en termes d'accélération notamment, et la densité d'énergie, qui favorise l'autonomie. Cependant, l'utilisation de cette technologie Li-ion pour constituer des batteries de traction pour EV n'est pas sans poser de nombreuses difficultés, notamment si l'on considère les niveaux de tension nécessaires aux bornes de la batterie, de l'ordre de 400 volts (V). Notamment, à de tels niveaux de tension, la mise en charge est soumise à des règles de sécurité très strictes pour prévenir tout risque d'électrocution, tout en devant rester ergonomique. Il s'agit là d'un problème que la présente invention se propose de résoudre.

La solution la plus connue, qui est également la plus simple, est de fournir un câble de charge « volant » de section large adaptée à la puissance de charge maximale envisagée, que l'on transporte dans le coffre du véhicule. Le principal inconvénient de cette solution est que, durant les phases de charge, le câble traine par terre et se salit. Donc, soit l'utilisateur le replie proprement (ce qui peut s'avérer compliqué compte-tenu de sa section importante) avant de le ranger dans son coffre et il se salit les mains, soit il le pose en vrac dans le coffre et il y a un risque non négligeable qu'il doive le démêler lorsqu'il en aura à nouveau besoin. Se salir les mains semble donc inévitable, et il s'agit là encore d'un inconvénient que la présente invention se propose de résoudre.

Pour éviter cet inconvénient, il est connu du brevet US 8,561,737 B2 un dispositif embarqué de dévidage d'un câble de charge d'un véhicule. Il se compose d'un coffre enfermant une bobine autour de laquelle le câble est enroulé. Une fiche est accessible au travers d'une trappe. Un inconvénient majeur de cette solution est sécuritaire : la fiche, qu'il faut attraper derrière la trappe, comporte trois connecteurs mâles saillants, que l'on peut facilement prendre en main. En cas de dysfonctionnement du système de déconnexion de la batterie haute-tension, une classique panne de relai par exemple, ces connecteurs peuvent rester sous tension, faisant courir un gros risque d'électrocution à l'utilisateur. Il s'agit là encore d'un inconvénient que la présente invention se propose de résoudre.

Le document FR 2 983 359 A1 divulgue un dispositif présentant des inconvénients similaires en termes d'ergonomie et de sécurité, ne comportant notamment pas de réels moyens de préhension malgré des connecteurs mâles potentiellement sous tension facilement accessibles.

L'invention a notamment pour but de surmonter les inconvénients précités, notamment ceux liés au risque d'électrocution. A cet effet, l'invention a pour objet un dispositif de dévidage d'un câble électrique contenu dans un logement et comportant une fiche à une de ses extrémités. La fiche est reliée par au moins un lien souple à un bouchon apte à fermer une ouverture dans le logement. Le bouchon comporte des moyens de préhension agencés relativement à la fiche de telle sorte que, en tirant le bouchon par lesdits moyens de préhension, la fiche est simultanément tirée hors du logement au travers de l'ouverture. La fiche forme un pistolet, un support étant disposé dans le logement au niveau de l'ouverture pour accueillir ledit pistolet, qui comporte en outre une poignée apte à être saisie dès lors que le pistolet est hors du logement.

Avantageusement, le support peut avoir une forme sensiblement allongée présentant deux extrémités, l'une des deux extrémités formant un anneau pour le passage du corps du pistolet, l'autre extrémité formant un appendice apte à accueillir le corps du câble et ayant une fonction de guidage du câble et une fonction de butée du pistolet.

De manière préférentielle, le support peut être fait d'un matériau plastique.

Avantageusement, le support peut être enserré, par son extrémité formant un anneau, dans une ouverture discale pratiquée dans une paroi du logement.

De manière préférentielle, le câble peut être enroulé autour d'une bobine contenue dans le logement. Celle-ci peut tourner autour d'un mécanisme comportant des contacteurs tournants et/ou un système de rappel automatique avec un cliquet d'arrêt.

La présente invention a également pour objet un véhicule électrique ou hybride comportant un tel dispositif pour ranger son câble de charge.

Avantageusement, l'ouverture dans le logement peut déboucher derrière le bouclier avant ou derrière le bouclier arrière dudit véhicule, un bol fait d'une matière souple pouvant relier les bords de ladite ouverture avec les bords d'une autre ouverture pratiquée dans ledit bouclier en regard de ladite ouverture dans le logement, de sorte que le dispositif ne soit pas déformé en cas de choc avant ou arrière.

Préférentiellement, l'ouverture dans le bouclier peut être masquée par un cache de même apparence que ledit bouclier.

Avantageusement, le logement peut être formé par un cadre disposé dans le coffre du véhicule.

Outre de limiter les risques d'électrocution, notamment grâce à son pistolet comportant une poignée, le dispositif selon l'invention a encore pour principal avantage de limiter les salissures, ainsi que sa compacité, pénalisant très peu le volume utile du coffre.

D'autres caractéristiques et avantages de l'invention apparaîtront à l'aide de la description qui suit faite en regard de dessins annexés 1, 2, 3, 4, 5a, 5b, 5c, 6, 7, 8a, 8b, 8c, 8d, 8e, 8f, 8g et 8h, qui illustrent des vues en perspective d'un même mode de réalisation avantageux de l'invention, embarqué à bord d'un véhicule électrique. Les éléments identiques illustrés sur ces figures partagent les mêmes références. Toutefois, pour des raisons de clarté, toutes les références n'ont pas été reportées sur toutes les figures.

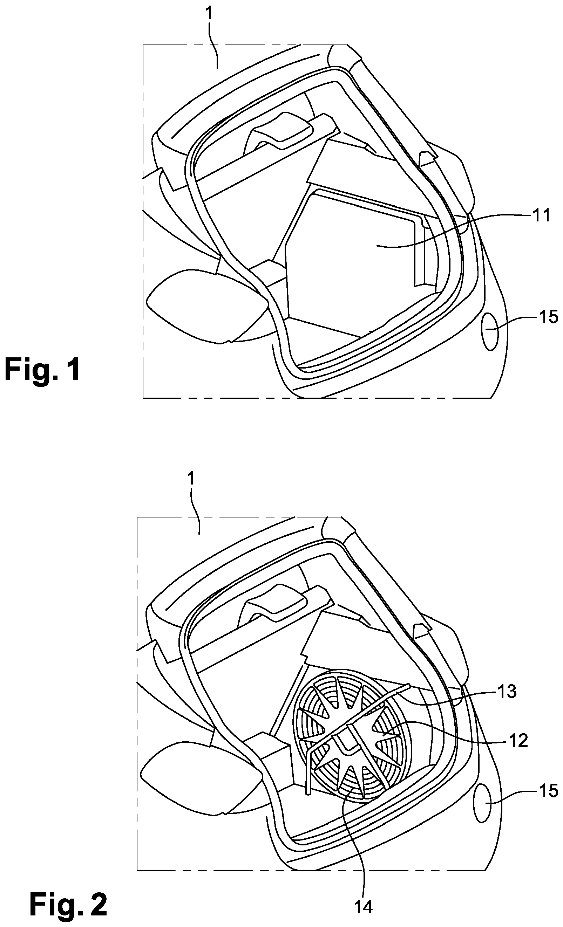

La figure 1 illustre un véhicule électrique 1 pourvu d'un dispositif selon l'invention, disposé dans le coffre du véhicule 1, derrière une paroi verticale 11. Avantageusement, la paroi 11 est amovible, comme illustré par la figure 2.

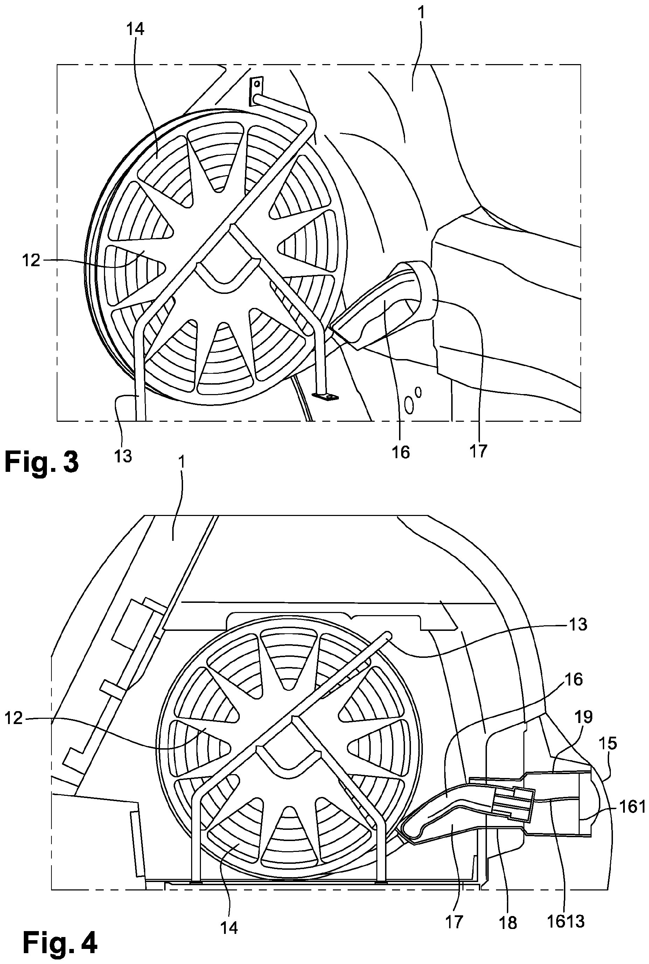

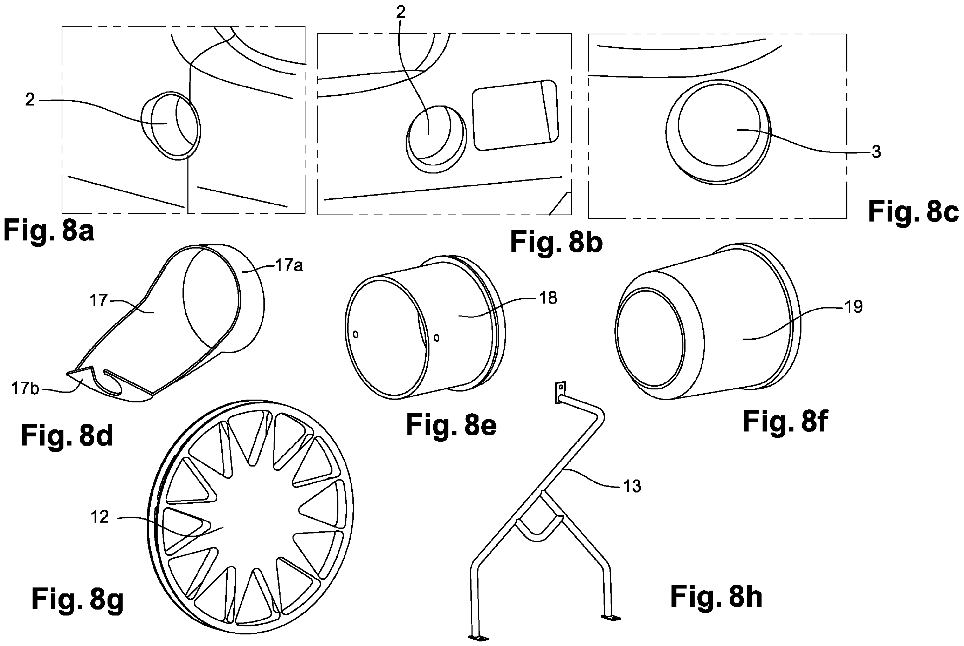

Sur la figure 2, le dispositif comporte une bobine 12 autour de laquelle est enroulé un câble 14 de charge, la bobine 12 pouvant être en matière plastique par exemple. Elle est illustrée par la figure 8g. La bobine 12 est enchâssée dans un cadre 13 de retenue, le cadre 13 pouvant être en métal par exemple. Il est illustré par la figure 8h. Le cadre 13 est fixé solidairement à la caisse du véhicule 1, par des vis par exemple. Une extrémité du câble 14 accueillie au centre de la bobine 12 est connectée à un chargeur disposé à bord du véhicule 1 par l'intermédiaire d'un mécanisme de contacteurs tournants permettant d'enrouler ou de dérouler le câble 14 sur plusieurs tours sans le vriller. Ce mécanisme, connu de l'état de la technique, n'est pas décrit pour des raisons de clarté. Il comporte également un système de rappel automatique avec cliquet d'arrêt, comme ceux utilisés sur les enrouleurs muraux de câbles électriques à usage domestique ou professionnel. L'autre extrémité du câble 14 est connectée à un pistolet de charge 16, comme illustré par les figures 3 et 4.

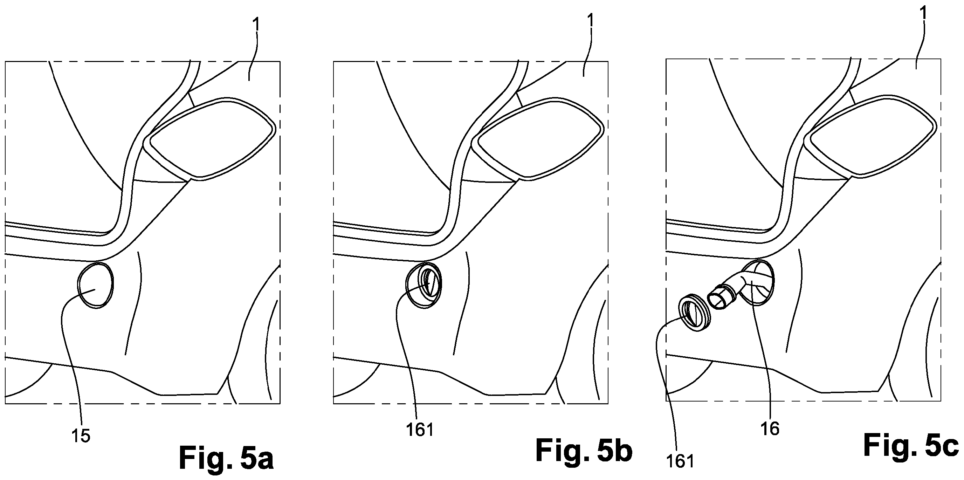

Les figures 3 et 4, tout comme les figures 1 et 2 d'ailleurs, illustrent le dispositif selon l'invention dans une configuration de rangement, le câble 14 étant enroulé complètement autour de la bobine 12. Dans cette configuration de rangement, le pistolet de charge 16 est accueilli dans un support 17 de forme sensiblement allongée présentant deux extrémités, comme illustré par la figure 8d. Le support 17 peut être fait d'un matériau plastique par exemple. L'une des extrémités du support 17 forme un anneau 17a pour le passage du corps du pistolet 16. L'autre extrémité du support 17 forme un appendice 17b apte à accueillir le corps du câble 14 et ayant une double fonction de guidage du câble 14 et de butée du pistolet 16, comme illustré par la suite. Le support 17 est enserré, par son extrémité formant un anneau 17a, dans une ouverture discale 2 pratiquée dans la tôle de la partie arrière de la caisse du véhicule 1. Cette ouverture 2 est illustrée à la figure 8a par une vue de la paroi intérieure de la caisse du véhicule 1 et à la figure 8b par une vue de la paroi extérieure de la caisse du véhicule 1. Plus précisément, l'extrémité du support 17 formant un anneau 17a est donc enserrée dans la paroi intérieure de la tôle de la partie arrière de la caisse du véhicule 1. Une traverse cylindrique 18, illustrée par la figure 8e, en matière plastique par exemple, est disposée dans l'ouverture 2 de manière à réaliser un conduit entre les deux parois de la caisse percées de l'ouverture 2, la traverse 18 permettant ainsi le passage facile du pistolet 16 au travers des deux parois de la caisse. Un bol conique 19 à deux ouvertures, une petite et une grande en regard l'une de l'autre, illustré par la figure 8f, prolonge l'ouverture 2 au travers d'une ouverture 3 pratiquée dans le bouclier plastique arrière du véhicule 1, en regard de l'ouverture 2, comme illustré par la figure 8c. Ainsi, le pistolet de charge 16 peut également passer facilement au travers du bouclier arrière. Avantageusement, le bol 19 peut être fait d'une matière souple de sorte que, en cas de choc arrière qui viendrait déformer le bouclier arrière, le pistolet 16 et son support 17 ne soient pas endommagés. Un bol similaire à ceux utilisés dans les trappes d'accès au réservoir d'essence des voitures thermiques peut être utilisé. Un cache 15, de même matière et de même couleur que le bouclier, vient masquer esthétiquement l'ouverture 3, comme illustré par la figure 5a.

Sur la figure 5a, le cache 15 est simplement emboîté dans le bouclier arrière du véhicule 1, de sorte qu'il puisse être aisément retiré à la main sans utiliser d'outil (par les mêmes moyens que le cache d'un anneau de remorquage par exemple). Une fois le cache 15 retiré, l'ouverture 3 laisse apparaître un bouchon 161 qui ferme hermétiquement la grande ouverture du bol 19, comme illustré par la figure 5b.

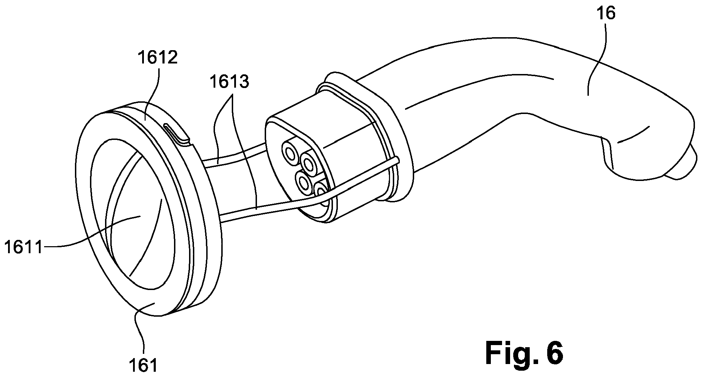

Sur la figure 5b, ainsi que sur la figure 6, le bouchon 161 comporte un élément de préhension 1611 permettant de saisir le bouchon 161 entre le pouce et l'index, de le tourner et de le tirer afin d'ouvrir le bol 19.

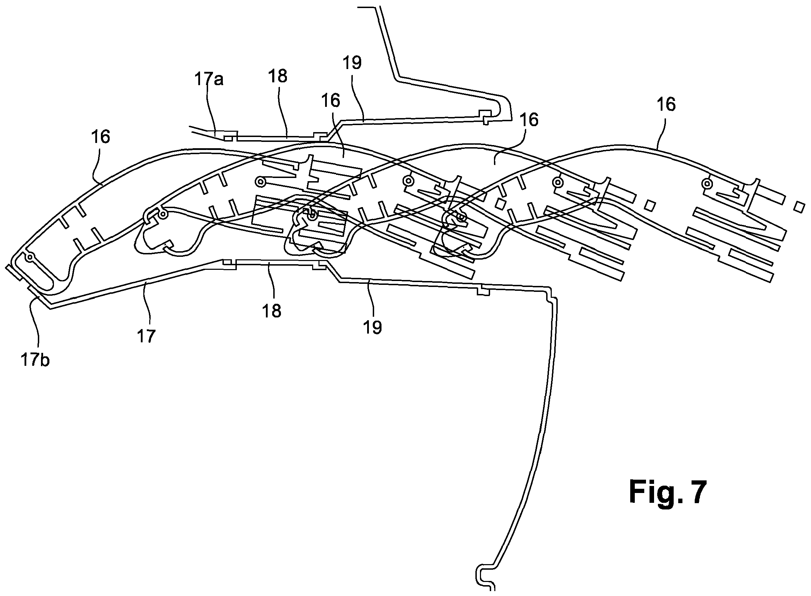

Sur les figures 5c et 6, le bouchon 161 comporte un joint torique 1612 sur sa périphérie, qui assure la fermeture hermétique du bol 19, empêchant l'eau et la poussière d'y pénétrer. Le bouchon 161 comporte également un double lien souple 1613 avec le pistolet 16, de sorte que lorsqu'on tire le bouchon 161, on tire également le pistolet 16, qui est ainsi extirpé de son support 17 au travers de la traverse 18 et du bol 19, comme illustré par la figure 7.

La figure 7 illustre, par quatre positions successives du pistolet 16, le déplacement de celui-ci entre sa position de rangement dans le support 17 et une position de préhension par l'utilisateur, où il n'a plus qu'à attraper le pistolet 16 par son corps formant poignée, sans aucun risque de mettre les doigts au contact du courant. Ce risque est encore diminué par le fait que le pistolet de charge 16 est muni d'une prise femelle, et non pas mâle. L'utilisateur peut alors lâcher le bouchon 161 d'une main, puis tirer sur le pistolet 16 de l'autre main, provoquant la mise en rotation de la bobine 12 dans le cadre 13 et donc le dévidage du câble 14 à l'extérieur du véhicule 1. L'utilisateur peut tirer sur la poignée 16 jusqu'à ce qu'il ait sorti suffisamment du câble 14 pour brancher le pistolet 16 dans une prise de charge, sans qu'il traine par terre.

L'exemple de réalisation ci-dessus n'est donné qu'à titre d'illustration, l'invention étant applicable à tout appareil électrique nécessitant d'être branché périodiquement à une prise de courant.

Le dispositif selon l'invention a donc pour principal avantage de maximiser la sécurité de l'utilisateur, qui ne risque pas l'électrocution, même en cas de panne d'un relai en position fermée, ceci sans pénaliser l'ergonomie. Avantageusement, il permet de dérouler le câble à la longueur voulue, et ainsi d'empêcher le câble de trainer par terre entre le véhicule et la prise de charge. Ainsi, son utilisation ne nécessite pas de se salir les mains. Enfin, il présente un encombrement limité : il pénalise peu le volume utile pour les bagages.

## Revendications

1. Véhicule électrique ou hybride (1) comportant un dispositif de dévidage d'un câble électrique de charge (14) contenu dans un logement et comportant une fiche à une de ses extrémités,
la fiche étant reliée par au moins un lien souple (1613) à un bouchon (161) apte à fermer une ouverture (2) dans le logement,
le bouchon comportant des moyens de préhension (1611) agencés relativement à la fiche de telle sorte que, en tirant le bouchon par lesdits moyens de préhension, la fiche est simultanément tirée hors du logement au travers de l'ouverture,
la fiche formant un pistolet (16), un support (17) étant disposé dans le logement au niveau de l'ouverture (2) pour accueillir ledit pistolet, ledit pistolet comportant une poignée apte à être saisie dès lors que le pistolet est hors du logement,
le véhicule étant **caractérisé en ce que**, l'ouverture (2) dans le logement débouchant derrière le bouclier avant ou derrière le bouclier arrière dudit véhicule, un bol (19) fait d'une matière souple relie les bords de ladite ouverture (2) avec les bords d'une autre ouverture (3) pratiquée dans ledit bouclier en regard de ladite ouverture (2) dans le logement, de sorte que le dispositif ne soit pas déformé en cas de choc avant ou arrière.

2. Véhicule électrique ou hybride (1) selon la revendication 1, le support (17) ayant une forme sensiblement allongée présentant deux extrémités, l'une des deux extrémités formant un anneau (17a) pour le passage du corps du pistolet (16), l'autre extrémité formant un appendice (17b) apte à accueillir le corps du câble (14) et ayant une fonction de guidage du câble et une fonction de butée du pistolet.

3. Véhicule électrique ou hybride (1) selon la revendication 1, le support (17) étant fait d'un matériau plastique.

4. Véhicule électrique ou hybride (1) selon la revendication 2, le support (17) étant enserré, par son extrémité formant un anneau (17a), dans une ouverture discale (2) pratiquée dans une paroi du logement.

5. Véhicule électrique ou hybride (1) selon l'une quelconque des revendications précédentes, le câble (14) étant enroulé autour d'une bobine (12) contenue dans le logement.

6. Véhicule électrique ou hybride (1) selon la revendication précédente, la bobine (12) tournant autour d'un mécanisme comportant des contacteurs tournants et/ou un système de rappel automatique avec un cliquet d'arrêt.

7. Véhicule électrique ou hybride (1) selon la revendication 1, l'ouverture (3) dans le bouclier étant masquée par un cache (15) de même apparence que ledit bouclier.

8. Véhicule électrique ou hybride (1) selon la revendication 1, le logement étant formé par un cadre (13) disposé dans le coffre du véhicule.

## Patentansprüche

1. Elektro- oder Hybridfahrzeug (1) mit einer Vorrichtung zum Abwickeln eines Elektroladekabels (14), das in einer Aufnahme enthalten ist und an einem seiner Enden einen Stecker umfasst,
wobei der Stecker über mindestens ein elastisches Band (1613) mit einem Stopfen (161) verbunden ist, der geeignet ist, eine Öffnung (2) in der Aufnahme zu verschließen,
wobei der Stopfen Greifeinrichtungen (1611) umfasst, die in Bezug auf den Stopfen so gestaltet sind, dass beim Ziehen des Stopfens an den Greifeinrichtungen der Stecker gleichzeitig durch die Öffnung hindurch aus der Aufnahme herausgezogen wird,
wobei der Stecker eine Pistole (16) bildet, wobei eine Halterung (17) in der Aufnahme an der Öffnung (2) angeordnet ist, um die Pistole aufzunehmen, wobei die Pistole einen Griff umfasst, der geeignet ist, ergriffen zu werden, wenn die Pistole außerhalb der Aufnahme ist,
wobei das Fahrzeug **dadurch gekennzeichnet ist, dass**, wenn die Aufnahme (2) hinter dem vorderen Stoßfänger oder hinter dem hinteren Stoßfänger des Fahrzeugs mündet, ein Napf (19) aus einem elastischen Material die Ränder der Öffnung (2) mit den Rändern einer anderen Öffnung (3) verbindet, die in dem Stoßfänger gegenüber der Öffnung (2) in der Aufnahme ausgebildet ist, so dass die Vorrichtung bei einem Aufprall vorne oder hinten nicht verformt wird.

2. Elektro- oder Hybridfahrzeug (1) nach Anspruch 1, wobei die Halterung (17) eine im Wesentlichen längliche Form hat, die zwei Enden aufweist, wobei das eine der beiden Enden einen Ring (17a) zum Durchführen des Körpers der Pistole (16) bildet, wobei das andere Ende einen Fortsatz (17b) bildet, der geeignet ist, den Körper des Kabels (14) aufzunehmen, und eine Führungsfunktion für das Kabel und eine Anschlagfunktion für die Pistole hat.

3. Elektro- oder Hybridfahrzeug (1) nach Anspruch 1, wobei die Halterung (17) aus einem Kunststoff hergestellt ist.

4. Elektro- oder Hybridfahrzeug (1) nach Anspruch 2, wobei die Halterung (17) an ihrem einen Ring (17a) bildenden Ende in eine diskoide Öffnung (2) eingespannt ist, die in einer Wand der Aufnahme ausgebildet ist.

5. Elektro- oder Hybridfahrzeug (1) nach einem der vorhergehenden Ansprüche, wobei das Kabel (14) um eine in der Aufnahme enthaltene Trommel (12) gewickelt ist.

6. Elektro- oder Hybridfahrzeug (1) nach dem vorhergehenden Anspruch, wobei die Trommel (12) um einen Mechanismus dreht, der drehende Kontaktgeber und/oder ein automatisches Rückholsystem mit einer Sperrklinke umfasst.

7. Elektro- oder Hybridfahrzeug (1) nach Anspruch 1, wobei die Öffnung (3) in dem Stoßfänger durch eine Verkleidung (15) mit dem gleichen Erscheinungsbild wie der Stoßfänger verdeckt wird.

8. Elektro- oder Hybridfahrzeug (1) nach Anspruch 1, wobei die Aufnahme durch einen Rahmen (13) gebildet wird, der im Kofferraum des Fahrzeugs angeordnet ist.

## Claims

1. Electric or hybrid vehicle (1) comprising a device for unwinding an electric charging cable (14) contained in a housing and comprising a plug at one of its ends,
the plug being linked by at least one flexible link (1613) to a stop (161) capable of closing an opening (2) in the housing,
the stopper comprising gripping means (1611) arranged relative to the plug in such a way that, in pulling the stopper by said gripping means, the plug is simultaneously pulled out of the housing through the opening,
the plug forming a gun (16), a support (17) being disposed in the housing at the opening (2) to accommodate said gun, said gun comprising a handle that can be gripped when the gun is out of the housing,
the vehicle being **characterized in that**, the opening (2) in the housing emerging behind the front bumper or behind the rear bumper of said vehicle, a bowl (19) made of a flexible material links the edges of said opening (2) with the edges of another opening (3) formed in said bumper facing said opening (2) in the housing, so that the device is not deformed in the event of front or rear impact.

2. Electric or hybrid vehicle (1) according to Claim 1, the support (17) having a substantially elongate form having two ends, one of the two ends forming a ring (17a) for the passage of the body of the gun (16), the other end forming an appendage (17b) capable of accommodating the body of the cable (14) and having a cable guiding function and a gun end-stop function.

3. Electric or hybrid vehicle (1) according to Claim 1, the support (17) being made of a plastic material.

4. Electric or hybrid vehicle (1) according to Claim 2, the support (17) being gripped, by its end forming a ring (17a), in a disc-like opening (2) formed in a wall of the housing.

5. Electric or hybrid vehicle (1) according to any one of the preceding claims, the cable (14) being wound around a reel (12) contained in the housing.

6. Electric or hybrid vehicle (1) according to the preceding claim, the reel (12) revolving about a mechanism comprising revolving contactors and/or an automatic return system with a stop ratchet.

7. Electric or hybrid vehicle (1) according to Claim 1, the opening (3) in the bumper being masked by a cover (15) of the same appearance as said bumper.

8. Electric or hybrid vehicle (1) according to Claim 1, the housing being formed by a frame (13) disposed in the trunk of the vehicle.
